# EUROPEAN PATENT APPLICATION

(11) **EP 4 032 698 A1**
(43) Date of publication of application: **27.07.2022**
(21) Application number: 22152899.5
(22) Date of filing: 24.01.2022
(51) Int. Cl.: B32B 15/01, H01F 3/04, H01F 41/02

(54) **AMORPHOUS LAMINATION CORE FOR MOTOR, METHOD FOR MANUFACTURING AMORPHOUS LAMINATION CORE FOR MOTOR, AND AMORPHOUS ALLOY RIBBON FOR MOTOR**

(30) Priority: 26.01.2021 JP 2021009942; 26.01.2021 JP 2021009943; 24.09.2021 JP 2021154979
(71) Applicant: Hitachi Metals, Ltd., Minato-ku Tokyo 108-8224 (JP)
(72) Inventor: MORITSUGU, Nakao, Tokyo, 108-8224 (JP); TAKASHIMA, Hiroshi, Tokyo, 108-8224 (JP)
(74) Representative: Seemann & Partner Patentanwälte mbB

(57) **Abstract**

To provide an amorphous lamination core (1) for motor. An amorphous lamination core for motor is configured by laminating amorphous alloy pieces (2) formed by punching an amorphous alloy ribbon, a pressurization member (125) is pressed from one side to a plurality of positions of the amorphous alloy piece, the number of pressurization portions with a crack is N, the total number of pressurization portions to which the pressurization member is pressed is N0, N0 is equal to or more than 100, and a degree of embrittlement is N/N0 x 100(%), the pressurization member is made of beryllium copper, and has a body portion of ϕ1.4 mm and a conical portion (127), the conical portion has a bottom surface of ϕ4 mm and a vertex angle θ of 120°, and when the degree of embrittlement is evaluated with the conical portion being pressed against the amorphous alloy piece and pressurization force of the pressurization member being set to 14 N, a degree of embrittlement of the amorphous alloy piece is equal to or less than 3.0%.

## Description

### CROSS-REFERENCE TO RELATED APPLICATIONS

The present application claims the benefits of Japanese Patent Application No. 2021-009942 and Japanese Patent Application No. 2021-009943 filed to Japanese Patent Office on January 26, 2021, and Japanese Patent Application No. 2021-154979 filed to Japanese Patent Office on September 24, 2021, the disclosure content of which is incorporated herein by reference.

### BACKGROUND

The present disclosure relates to an amorphous lamination core for motor, a method for manufacturing an amorphous lamination core for motor, and an amorphous alloy ribbon for motor.

Globally, the power consumption of motors is said to be about half of the total power consumption. Power loss of motors can be roughly divided into magnetic core loss, and copper loss and mechanical loss in a core for motor. When focusing only on the magnetic core loss, the material is required to have good magnetic properties.

Currently, the main soft magnetic material used for a core for motor is a non-oriented magnetic steel sheet. However, in recent years, amorphous metal ribbons, which have much better magnetic properties than non-oriented electrical steel sheets, have been attracting attention and have begun to be put into practical use in limited applications. It is clear that expanding the application range of amorphous alloy ribbons will help reduce global power consumption, and the expansion of their use is expected. As the core for motor, a lamination core in which a non-oriented electrical steel sheet or an amorphous alloy ribbon is processed into a predetermined shape and laminated is used. There are many process methods, which include, in order to obtain a core for motor having a complicated shape, punching processing, which enables processing the core into a shape in accordance with the complicated shape in a short processing time.

An amorphous alloy ribbon of about 30 µm is generally used. This thickness is about 1/5 to 1/20 of the thickness of the non-oriented electrical steel sheet. That is, when the lamination core is manufactured from the amorphous alloy ribbon, the number of laminations increases, and the number of punching processes increases accordingly.

The amorphous alloy ribbon is sometimes provided to the market as it is in primary processing by casting, or provided to the market in a state of being subjected to additional processing such as cutting off the edge portion of the ribbon in the width direction and cutting to a predetermined width dimensions and length so that it is easily handled during transportation or the like. In general, those having been subjected to secondary processing such as cutting and punching using them are used for the magnetic core. Hereafter, for easy explanation, the amorphous alloy ribbon before subjected to secondary processing is called the as-cast ribbon to distinguish it.

For example, Japanese Unexamined Patent Application Publication No. 2008-213410 and International Publication No. 2018/155206 disclose that amorphous alloy ribbons are laminated and the laminated body is punched. In the both known documents, punching is performed after laminating is performed, and therefore the number of punches decreases.

Japanese Unexamined Patent Application Publication No. 2008-213410 discloses preparing a laminated sheet in which a plurality of soft magnetic metal ribbons of 8 to 35 µm in thickness are laminated, and obtaining and punching a laminated sheet of 0.5 µm or more to 2.5 µm or less in thickness of each thermosetting resin between the metal ribbons and 50 µm or more and 250 µm or less in total thickness of the laminated sheet.

International Publication No. 2018/155206 discloses a method for manufacturing a laminated member including fixing a part between layers of laminated amorphous metal ribbons to one another, and punching a laminated member by cutting the laminated amorphous metal ribbons at a location other than the fixed portion of the amorphous metal ribbons. The disclosure describes that the thickness of the amorphous metal ribbon is 10 to 60 µm.

Japanese Unexamined Patent Application Publication No. 2003-324861 describes: punching a required position of the core piece from the amorphous thin plate; forming the caulked part; punching the profile; laminating by caulking to manufacture the core; heating the thin plate to a temperature range lower than a crystallizing temperature from 200°C or higher by an amorphous thin plate heater before the plate is punched at the core piece by a mold unit; forming the caulking protrusion 4 (opening 16 for caulking) of at least the caulked part of the piece; punching the profile; and laminating by caulking.

### SUMMARY

An amorphous lamination core for motor is produced by punching an amorphous alloy ribbon to obtain an amorphous alloy piece having a desired shape, and laminating the amorphous alloy piece. At this time, some amorphous alloy pieces are prepared by punching one amorphous alloy ribbon, and some amorphous alloy pieces are prepared by punching a laminate body in which a plurality of amorphous alloy ribbons are laminated.

The amorphous lamination core for motor rarely has a simple shape, and sometimes includes a part that requires fine modeling. In this case, it is difficult to form an amorphous alloy piece by punching once, and it is necessary to perform punching a plurality of times to obtain an amorphous alloy piece having a desired shape. When punching a plurality of times, positioning at each punching step is important. For this reason, positioning is often performed for each punching step by opening a positioning hole and inserting a positioning pin into the hole.

The present inventor has found that when punching is performed a plurality of times, a crack occurs in a positioning hole and positioning accuracy cannot be maintained. If the positioning accuracy cannot be maintained, the accuracy of the shape of the amorphous alloy piece deteriorates, and a desired amorphous lamination core for motor cannot be obtained.

In the present disclosure, it is preferable to suppress occurrence of cracks in the positioning holes and secure the positioning accuracy, and it is desirable to thus provide an amorphous lamination core for motor having good shape accuracy.

The present disclosure includes the following configuration.
<1> An amorphous lamination core for motor, wherein the amorphous lamination core for motor is configured by laminating amorphous alloy pieces formed by punching an amorphous alloy ribbon, a pressurization member is pressed from one side to a plurality of positions of the amorphous alloy piece, the total number of pressurization portions to which the pressurization member is pressed is N0, the number of pressurization portions with a crack is N, N0 is equal to or more than 100, and the degree of embrittlement is N/N0 × 100(%), the pressurization member is made of beryllium copper, and has a body portion of ϕ1.4 mm and a conical portion, the conical portion has a bottom surface of φ4 mm and a vertex angle θ of 120°, and when the degree of embrittlement is evaluated with the conical portion being pressed against the amorphous alloy piece and pressurization force of the pressurization member being set to 14 N, the degree of embrittlement of the amorphous alloy piece is equal to or less than 3.0%.
<2> The amorphous lamination core for motor according to <1>, wherein an interval of the pressurization portion is 4 to 6 mm.
<3> An amorphous alloy ribbon for motor, wherein the amorphous alloy ribbon for motor is used for an amorphous lamination core for motor produced by punching and laminating amorphous alloy ribbons,
   the amorphous alloy ribbon for motor has a long shape having a width of equal to or greater than 100 mm,
   a total of 10 evaluation regions of five locations from each of both end portions of the amorphous alloy ribbon for motor in a width direction or a total of 15 evaluation regions of five locations from each of both end portions and center portion in a width direction are set, one evaluation region is a region of about 53.5 mm × about 53.5 mm, a pressurization member is pressed against 313 points in the one region, a total number of pressurization portions to which a pressurization member is pressed is N0, a number of pressurization portions with a crack is N, and a degree of embrittlement is N/N0 × 100(%),
   the pressurization member is made of beryllium copper, and has a body portion of ϕ1.4 mm and a conical portion, the conical portion has a bottom surface of ϕ4 mm and a vertex angle θ of 120°, and when the degree of embrittlement is evaluated with the conical portion being pressed against the amorphous alloy ribbon for motor and pressurization force of the pressurization member being set to 14 N, and
   the degree of embrittlement is equal to or less than 3.0%.
<4> The amorphous alloy ribbon for motor according to <3>, wherein an interval of the pressurization portion is 4 to 6 mm.
<5> A method for manufacturing an amorphous lamination core for motor, the method for manufacturing in which an amorphous alloy piece is produced by punching an amorphous alloy ribbon, and an amorphous lamination core for motor is produced by laminating the amorphous alloy piece,
   preparing an amorphous alloy ribbon for motor that is long and has a width of equal to or greater than 100 mm is included,
   a total of 10 evaluation regions of five locations from each of both end portions of the amorphous alloy ribbon in a width direction or a total of 15 evaluation regions of five locations from each of both end portions and center portion in a width direction are set, one evaluation region is a region of about 53.5 mm × about 53.5 mm, a pressurization member is pressed against 313 points in the one region, a total number of pressurization portions to which a pressurization member is pressed is N0, a number of pressurization portions with a crack is N, and a degree of embrittlement is N/N0 × 100(%),
   the pressurization member is made of beryllium copper, and has a body portion of ϕ1.4 mm and a conical portion, the conical portion has a bottom surface of ϕ4 mm and a vertex angle θ of 120°, and when the degree of embrittlement is evaluated with the conical portion being pressed against the amorphous alloy ribbon and pressurization force of the pressurization member being set to 14 N, and
   the degree of embrittlement is equal to or less than 3.0%.
<6> The method for manufacturing according to <5>, wherein an interval of the pressurization portion is 4 to 6 mm.
<7> The method for manufacturing according to <5> or <6>, wherein the amorphous alloy piece is produced by punching the amorphous alloy ribbon a plurality of times.
<8> The method for manufacturing according to any of <5> to <7>, wherein an amorphous alloy piece of a lamination body is produced by laminating and then punching the amorphous alloy ribbon.
<9> The method for manufacturing according to any of <5> to <8>, wherein an evaluation sample is cut out from an as-cast ribbon wrapped with a long amorphous alloy ribbon, the degree of embrittlement of the evaluation sample is evaluated, and an amorphous alloy ribbon of an as-cast ribbon with the degree of embrittlement of equal to or less than 3.0% is used.

### EFFECTS OF THE INVENTION

According to the present disclosure, since an amorphous lamination core for motor is configured by using an amorphous alloy ribbon having a good degree of embrittlement, it is possible to suppress occurrence of cracks in the positioning hole and to provide an amorphous lamination core for motor having good shape accuracy. It is also possible to provide an amorphous alloy ribbon for motor having a good degree of embrittlement.

### BRIEF DESCRIPTION OF THE DRAWINGS

Embodiments of the present disclosure will be described hereinafter by way of example with reference to the accompanying drawings, in which:
FIG. 1 is a view showing an amorphous lamination core for motor according to an embodiment of the present disclosure.
FIG. 2 is a plan view of an amorphous alloy piece used in the amorphous lamination core for motor according to an embodiment of the present disclosure.
FIG. 3 is a schematic view showing a structure of a progressive mold used in a method for manufacturing an amorphous lamination core for motor according to an embodiment of the present disclosure.
FIG. 4 is a view showing an evaluation region for embrittlement of an amorphous alloy ribbon for motor according to an embodiment of the present disclosure.
FIG. 5 is a view showing an evaluation region for embrittlement of an amorphous alloy ribbon for motor according to another embodiment of the present disclosure.
FIG. 6 is a view showing an evaluation region for embrittlement of an amorphous alloy ribbon for motor according to another embodiment of the present disclosure.
FIG. 7 is a view showing an evaluation region for embrittlement of an amorphous alloy ribbon for motor according to another embodiment of the present disclosure.
FIG. 8 is a schematic view showing an example of a pressurization member of the present disclosure.
FIG. 9 is a schematic view showing an example of an outline configuration of a device used for evaluating embrittlement of the amorphous alloy ribbon of the present disclosure.
FIG. 10 is a schematic view showing another example of an outline configuration of a device used for evaluating embrittlement of the amorphous alloy ribbon of the present disclosure.
FIG. 11 is a view showing an example of a state in which a sample is placed on a stage of a device in the embrittlement evaluation of the present disclosure.
FIG. 12 is a view for explaining an example of a crack confirmation method in a pressurization portion of a sample in the embrittlement evaluation of the present disclosure.
FIG. 13 is a plan view of a sample used for the embrittlement evaluation of the present disclosure.
FIG. 14 is an enlarged photograph of a pressurization portion without a crack of an embodiment of the present disclosure by a laser microscope.
FIG. 15 is an enlarged photograph of a pressurization portion with a crack of an embodiment of the present disclosure by a laser microscope.
FIG. 16 is a photograph in which waviness of a surface of the pressurization portion in the same field of view as in FIG. 14 is a difference in brightness.
FIG. 17 is a photograph in which waviness of a surface of the pressurization portion in the same field of view as in FIG. 15 is a difference in brightness.

### DETAILED DESCRIPTION OF EXEMPLARY EMBODIMENTS

Preferred embodiments of the present disclosure will be described with reference to the drawings. The present disclosure is not necessarily limited to the embodiments described below, and unless otherwise specified, includes alternatives and modifications included in the scope of claims. In the drawings to be referred to, the same reference numerals indicate the same elements, and redundant contents may be omitted as appropriate in the description.

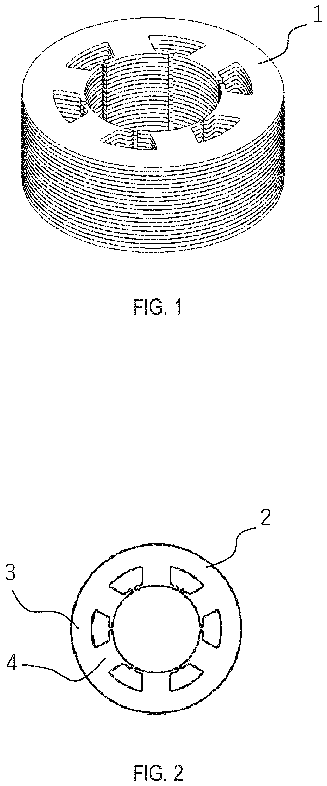

FIG. 1 shows an amorphous lamination core 1 for motor according to an embodiment of the present disclosure. FIG. 2 shows a plan view of an amorphous alloy piece 2 used in this amorphous lamination core for motor. This amorphous lamination core 1 for motor can be used as a stator core for a motor. This amorphous lamination core 1 for motor includes a circular yoke portion 3 on the outer circumference and a teeth portion 4 protruding from there in the central direction, and a winding is formed in the teeth portion. This yoke portion 3 and this teeth portion 4 are shown in the amorphous alloy piece of FIG. 2.

This amorphous alloy piece 2 is produced by punching an amorphous alloy ribbon, and the amorphous lamination core 1 for motor is produced by laminating the amorphous alloy piece. Some of the amorphous alloy pieces 2 are produced by punching one amorphous alloy ribbon and some of the amorphous alloy pieces 2 are produced by punching a laminate body of a plurality of amorphous alloy ribbons.

This amorphous alloy piece requires fine modeling, and when punching an amorphous alloy ribbon, it is difficult to punch-the required shape with a single punching. Therefore, it is produced by punching a plurality of times. A progressive mold can be used for the punching a plurality of times.

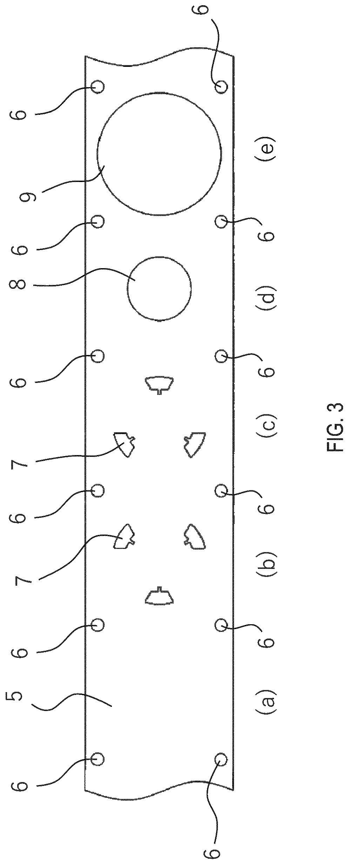

FIG. 3 shows a conceptual view of an example of a progressive mold when the amorphous alloy piece 2 of FIG. 2 is produced. Here, an amorphous alloy ribbon 5 moves from left to right in the figure, and punching of steps (a) to (e) is sequentially performed.

In step (a), a positioning hole 6 (two holes of the upper and lower at the left end of FIG. 3) is formed. This positioning hole 6 is used for positioning in the next step.

In step (b), positioning is performed by inserting a positioning pin into the positioning hole 6, and a punch portion 7 constituting the teeth portion 4 is punched at three places.

In step (c), positioning is performed by inserting a positioning pin into the positioning hole 6, and the punch portion 7 constituting the teeth portion 4 is punched at three places.

In step (d), positioning is performed by inserting a positioning pin into the positioning hole 6, the teeth portion 4 is formed, and a circular punching 8 for forming an inner peripheral space is performed.

In step (e), positioning is performed by inserting a positioning pin into the positioning hole 6, and a circular punching 9 on the outer circumference of the circular yoke portion 3 is performed.

As a result, the amorphous alloy piece 2 shown in FIG. 2 can be punched.

The amorphous alloy piece 2 punched in step (e) can be stacked at the same time as punching. It is possible to produce the amorphous lamination core for motor by performing only punching in step (e) and separately laminating the amorphous alloy piece 2. It is also possible to produce the amorphous lamination core for motor by performing a work of stacking at the same time as punching in step (e), and further stacking the stacked amorphous alloy pieces 2 in another step.

The amorphous alloy piece 2 can be produced by punching a plurality of times in this manner. In this punching a plurality of times, the positioning hole is an important part for ensuring the punching accuracy. If a crack occurs in a positioning hole during this plurality of punching processes, the positioning accuracy is lowered, and the amorphous alloy piece 2 having a desired shape cannot be produced. Therefore, the present inventor has examined a means for preventing a crack from occurring in the positioning hole during a plurality of punching processes.

The amorphous alloy ribbon is obtained by continuously casting a molten metal adjusted to an appropriate composition under a cooling condition of about 10⁶°C/sec by single-roll rapid-quenching solidification processing or the like. The amorphous alloy ribbon may have a part that is not cooled at an appropriate speed due to various factors in the manufacturing process such as surface scratches on the cooling roll, unevenness on the cooling roll surface due to adhesion of foreign matters, and non-uniformity of temperature distribution of the cooling roll, and some parts may crystallize. Partial fluctuations in the alloy composition may occur in the amorphous alloy ribbon also due to the influence of impurities contained in the alloy. When such non-uniform cooling or fluctuation in the alloy composition occurs, a partially crystallized amorphous alloy ribbon tends to be formed. It is considered that such an amorphous alloy ribbon is likely to be partially embrittled, and the strength is weakened at the embrittled portion. It is considered that when punching is performed a plurality of times using the amorphous alloy ribbon whose strength is weakened by this embrittlement, the possibility of occurrence of a crack in the positioning hole increases.

It is known that a tearing test is used to evaluate embrittlement of amorphous alloy ribbons. Specifically, there is an evaluation method specified as strip tear brittleness (strip tear ductility) in JIS C2534 (2017) and IEC60404-8-11. In these evaluation methods/tests, a test piece (sample) of a certain length (length twice the circumference of the casting roll) is obtained from a long amorphous alloy ribbon, and the test piece is torn in the casting direction of the amorphous alloy ribbon, divided by the number of brittle spots to be generated, and evaluated. The brittle spot is defined as a region where damage in dimensions greater than about 6 mm such as a crevice path, a directional change, and broken piece separation, when the test piece is torn. The property of strip tear brittleness is divided into five stages by the number of brittle spots. It is specified that the test piece is torn in a direction parallel to the casting direction at five points of 12.7 mm and 25.4 mm in the width direction from the edge and the center of the width direction, and the number of brittle spots in one test piece does not exceed 10.

Although the tearing test described above exists as an evaluation of embrittlement of the amorphous alloy ribbon, the present inventor considers that a more detailed evaluation is necessary to solve the problems of the present disclosure, and has found a new evaluation method.

In the method of evaluating the embrittlement of the amorphous alloy ribbon that has been newly found by the present inventor, a pressurization member is pressed from one side to a plurality of positions against the amorphous alloy ribbon or the amorphous alloy piece, the total number of pressurization portions to which the pressurization member is pressed is N0, the number of pressurization portions with a crack is N, and the degree of embrittlement is N/N0 × 100(%),

Then, the present inventor has found that by using an amorphous alloy ribbon having an embrittlement degree of equal to or less than 3.0%, it is possible to suppress occurrence of a crack in the positioning hole during a plurality of punching processes.

This degree of embrittlement is preferably equal to or less than 2.5%, more preferably equal to or less than 2.0%, and yet more preferably equal to or less than 1.5%.

The amorphous alloy ribbon for motor preferably has a width of equal to or more than 100 mm. The amorphous alloy ribbon for motor more preferably has a width of equal to or more than 140 mm, and when used in a large motor, a wider amorphous alloy ribbon is preferable. There are cases in which for example, equal to or more than 200 mm or equal to or more than 220 mm is required.

As described above, the amorphous alloy ribbon is obtained by continuous casting by single-roll rapid-quenching solidification processing, and is manufactured in a long form.

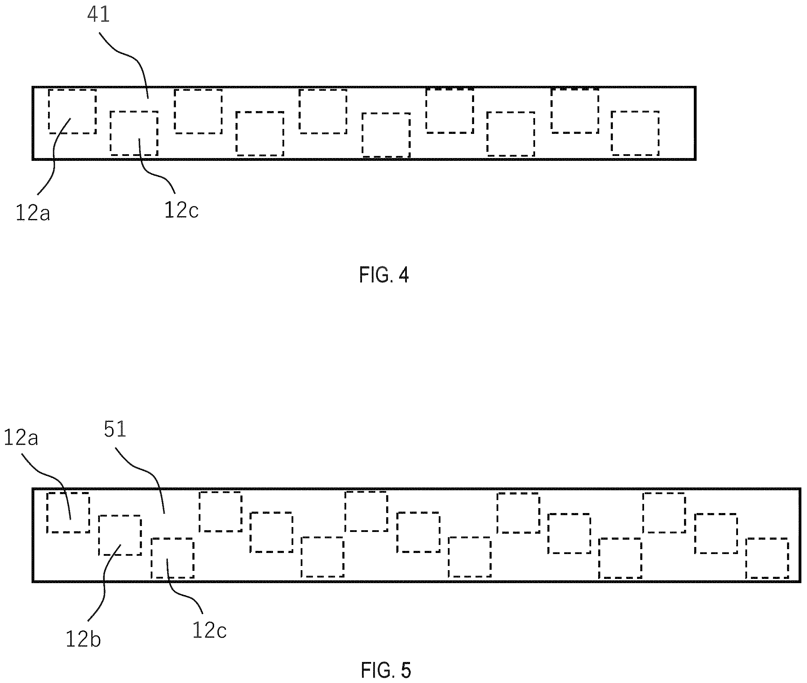

When evaluating embrittlement of the amorphous alloy ribbon for motor, in an amorphous alloy ribbon with a width of 100 mm, for example, as shown in FIG. 4, a total of 10 evaluation regions 12a and 12c of five locations from each of both end portions of an amorphous alloy ribbon 41 in a width direction. The evaluation region 12a on one end side is about 8.3 mm inward from the edge portion, and one evaluation region is a region of about 53.5 mm × about 53.5 mm. The evaluation region 12c on the other end side is also about 8.3 mm inward from the edge portion, and one evaluation region is a region of about 53.5 mm × about 53.5 mm. Then, a pressurization member is pressed against 313 points in one region, the total number of pressurization portions to which a pressurization member is pressed is N0, the number of pressurization portions with a crack is calculated, with the number of pressurization portions with a crack being N, and the degree of embrittlement is calculated as N/N0 × 100(%). Here, N0 becomes 3130.

FIG. 5 is a view showing an example of an evaluation region in a case of an amorphous alloy ribbon having a width of 142 mm. As shown in FIG. 5, a total of 15 evaluation regions 12a, 12b, and 12c of five locations from each of both end portions and center portion of an amorphous alloy ribbon 51 in a width direction are set. The evaluation region 12a on one end side is about 8.3 mm inward from the edge portion, and one evaluation region is a region of about 53.5 mm × about 53.5 mm. The evaluation region 12c on the other end side is also about 8.3 mm inward from the edge portion, and one evaluation region is a region of about 53.5 mm × about 53.5 mm. The evaluation region 12b in the central portion is the central portion in the width direction, and one evaluation region is a region of about 53.5 mm × about 53.5 mm. Then, a pressurization member is pressed against 313 points in one region, the total number of pressurization portions to which a pressurization member is pressed is N0, the number of pressurization portions with a crack is calculated, with the number of pressurization portions with a crack being N, and the degree of embrittlement is calculated as N/N0 × 100(%). Here, N0 becomes 4695.

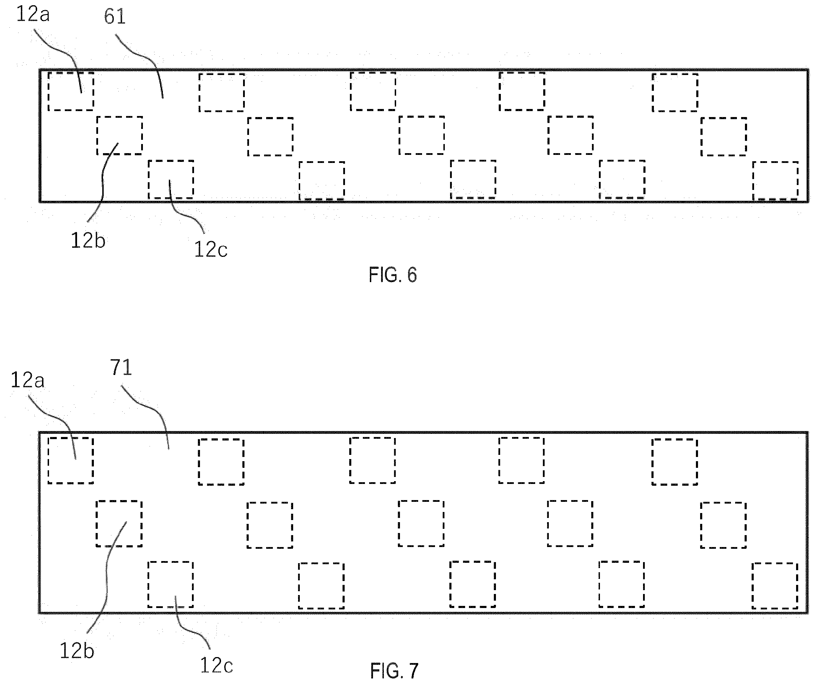

FIG. 6 is a view showing an example of an evaluation region in a case of an amorphous alloy ribbon having a width of 213 mm. As shown in FIG. 6, a total of 15 evaluation regions 12a, 12b, and 12c of five locations from each of both end portions and center portion of an amorphous alloy ribbon 61 in a width direction are set. The evaluation region is as described in FIG. 5

FIG. 7 is a view showing an example of an evaluation region in a case of an amorphous alloy ribbon having a width of 240 mm. As shown in FIG. 7, a total of 15 evaluation regions 12a, 12b, and 12c of five locations from each of both end portions and center portion of an amorphous alloy ribbon 71 in a width direction are set. The evaluation region is as described in FIG. 5

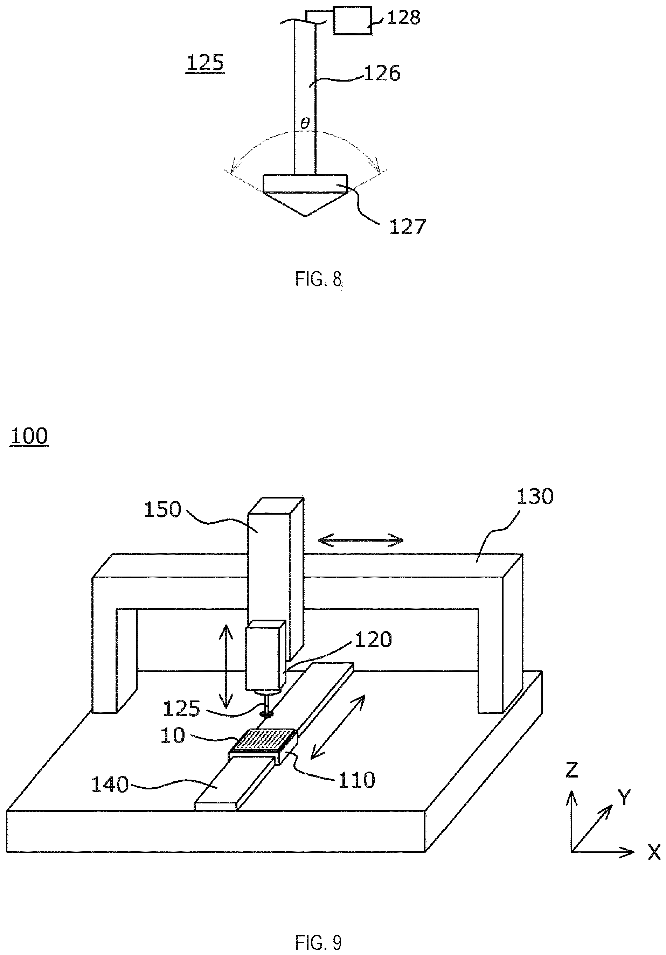

FIG. 8 shows an example of a pressurization member. This pressurization member 125 is made of beryllium copper, and has a columnar body portion 126 of ϕ1.4 mm and a conical portion 127, the conical portion 127 has a bottom surface of ϕ4 mm and a vertex angle θ of 120°, and the conical portion is pressed against the amorphous alloy ribbon. The pressurization force of this pressurization member 125 is set to 14 N.

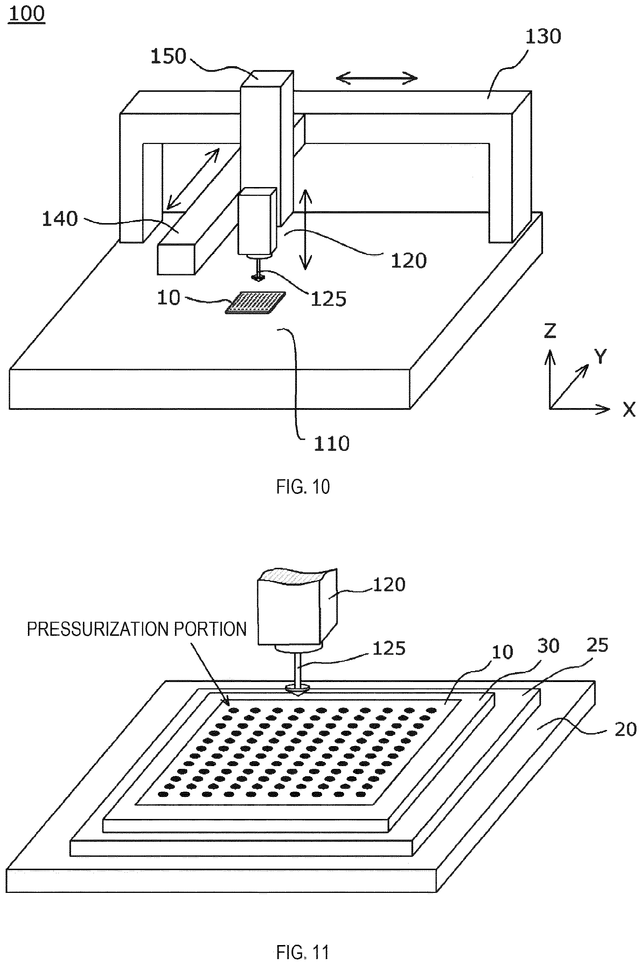

A pressurization test device used for embrittlement evaluation will be described. FIGS. 9 and 10 are schematic views showing an outline configuration of a pressurization test device used for embrittlement evaluation. The pressurization test device includes a stage 110 having a plane on which a sample 10 can be placed, and a pressurization means that is positioned above the stage 110 and can pressurize in a substantially perpendicular direction with respect to the plane of the sample 10 placed on the stage 110. In an example of the configuration of this pressurization test device 100, the amorphous alloy ribbon or the amorphous alloy piece for which embrittlement evaluation is performed is described as a rectangular sample 10. This sample 10 is not limited to the shape shown in the figure, and can be replaced with one in the form of an amorphous alloy ribbon or an amorphous alloy piece to be evaluated.

The pressurization test device 100 illustrated in FIG. 9 includes an X-axis direction drive unit 130 and a Z-axis direction drive unit 150 for moving the position of the pressurization means, and a Y-axis direction drive unit 140 for moving the stage 110, and the pressurization means can be relatively moved to an arbitrary position on the sample 10 by using them as movement means. As shown in FIG. 10, the test device 100 may be a test device in which the pressurization means is moved by the X-axis direction drive unit 130, the Y-axis direction drive unit 140, and the Z-axis direction drive unit 150 without using the stage 110 as a movable stage, and the sample 10 is stationary on the stage 110.

Each of the drive units 130, 140, and 150 has a stepping motor or servo (pulse) motor not illustrated, a ball screw, and a linear guide, and preferably includes an encoder for position detection.

The pressurization means positioned above the sample 10 placed on the stage 110 of the pressurization test device 100 has a pressurization member 125 that can pressurize the sample 10 to form indentation. The force that presses this pressurization member 125 against the sample 10 requires a certain force in order to evaluate the presence or absence of a crack. In the present disclosure, the force that presses the pressurization member 125 against the sample 10 is set to 14 N.

The pressurization means of the pressurization member 125 includes, for example, a force gauge 120 and the pressurization member 125, and is configured by connecting the rod-shaped pressurization member 125 to the force gauge 120 via a fixing means such as a collet chuck. The pressurization means is fixed to a slider of the Z-axis direction drive unit 150 of the pressurization test device 100 by bolting or the like. The Z-axis direction drive unit 150 lowers the pressurization means toward the plane of the sample 10 at a predetermined speed, and presses the tip end side of the pressurization member 125 against the sample 10 to pressurize. The tip end of the pressurization member 125 descends to a preset position, forms a pressurization portion with an indentation on the sample 10, and then ascends to a predetermined position by the Z-axis direction drive unit 150 so as to separate from the sample 10. Next, the pressurization means is moved to a different position on the plane of the sample 10 by the X-axis direction drive unit 130 and the Y-axis direction drive unit 140, and then formation of the next pressurization portion is repeated for a predetermined number of times. It is preferable that the series of operations of the pressurization portion formation is automatically controlled by a programmable control device. The force pressed against the sample 10 when the pressurization portion is formed can be measured by the force gauge 120 to which the pressurization member 125 is attached. In the pressurization portion where the sample 10 is thin and indentation remains, the pressure surface side of the sample 10 is recessed, and the opposite surface side becomes a protrusion. If the tip end of the pressurization member 125 is hemispherical or an obtuse-angled pyramid, cracks in the pressurization portion are likely to occur from the vicinity of the top portion of the protrusion to the hem.

The pressurization means may be configured to include a load sensor (load cell) 128 and the pressurization member 125. It is also possible to control the pressurization portion formation on the sample 10 from the pressure information obtained based on the electric signal from the load cell 128. As the tip end side of the pressurization member 125 comes into contact with the plane of the sample 10 and descends to a set position, the force applied to the sample 10 increases. If a crack occurs in the pressurization portion until the pressurization member 125 reaches a predetermined lowering position, the force is reduced. The load cell 128 detects such a change in the pressing force, an electric signal corresponding to the force applied to the sample 10 is obtained in pressurization portion formation, and an output of an analog signal from an amplification means for amplifying the electric signal is converted into a digital signal by an AD conversion means and detected, whereby it is possible to determine whether or not a cracks has occurred in the pressurization portion. By an arithmetic processing means, it is also possible to easily obtain data such as the distribution of the pressing force in the pressurization portion, the distribution of the pressurization portions in which the cracks have occurred, and the number of pressurization portions per unit area in which cracks have occurred.

Based on the information from the load cell 128, the tip end side of the pressurization member 125 may be lowered until the force applied to the pressurization portion becomes a preset pressure force value (14 N). When the occurrence of a crack is detected, descending of the pressurization member 125 may be stopped and raised to a predetermined position to move to the next operation of pressurization portion formation.

FIG. 11 is a view showing an example of a state in which the sample 10 is placed on the stage of the pressurization test device. In the example shown in FIG. 11, a plate-shaped metal base member 20 is placed on the flat stage, and the sample 10 is placed on a magnetic adsorbent member 25 and an elastic member 30 stacked in this order. The portion indicated by the ellipse painted in black in the sample 10 corresponds to the pressurization portion of the sample 10. In order to prevent the base member 20 from moving and the position of the sample 10 from shifting, it is preferable that a through hole is formed in the base member 20 so as to be able to be fastened and fixed to the stage 110 with screws or the like. In addition to fastening, fixing may be performed by a known means such as clamping or adsorbing. The base member 20 is preferably made of aluminum in consideration of workability, but may be made of steel or stainless steel so that it can be easily fixed to the magnetic adsorbent member 25.

The magnetic adsorbent member 25 is a magnetic adsorbent means for fixing the sample 10 by magnetic adsorbent, and is preferably composed of a magnet sheet. If the base member 20 is non-magnetic, the magnet sheet only needs to be fixed by an adhesive means such as double-sided tape. The sample 10 has a plate shape with a thickness of equal to or less than several tens of µm at most, but by forming a magnet sheet having a size that covers at least a part, preferably the entirety, of the region for forming the pressurization portion, it is possible to magnetically adsorb and fix the sample 10 via the elastic member 30 over the entire surface. It is preferable to adjust the adsorbent force by the magnetic force of the magnetic adsorbent means itself or the interval between the magnetic adsorbent means and the sample 10 for easy removal.

For plastically deforming the sample 10 to form a pressurization portion having indentation, it is preferable to place the elastic member 30 between the stage 110 and the sample 10 as an elastic base so as not to hinder the deformation. The elastic member 30 can also absorb and disperse the stress at the time of pressurization portion formation applied to the underlying magnet sheet or the like via the sample 10.

The elastic member 30 is preferably a sheet of fluororubber or silicon rubber. It is preferable that the size of the elastic member 30 also covers at least a part of the region for forming the pressurization portion of the sample 10 and further covers the entirety, similarly to the magnetic adsorbent member 25. From the required function, the elastic member 30 preferably has a Shore A hardness of 30 or more and 100 or less, more preferably 35 or more and 90 or less, and yet more preferably 40 or more and 70 or less. The thickness is preferably 0.5 mm or more, more preferably 0.8 mm or more, and yet more preferably 1.0 mm or more. The thicker the elastic member 30 becomes, the more difficult it becomes to obtain the magnetic adsorbent force of the sample 10 by the magnetic adsorbent member 25, and therefore, the thickness is preferably 3.0 mm or less, more preferably 2.5 mm or less, and further more preferably 2.0 mm.

Next, a method for confirming the sample 10 that has undergone the pressurization test process will be described. The state of the pressurization portion (presence or absence of a crack) is obtained by observing the indentation, and may be visually evaluated using a magnifying glass or an optical microscope, or the indentation may be observed by an imaging means such as a CCD camera or a CMOS camera and the obtained image data may be image-processed and evaluated.

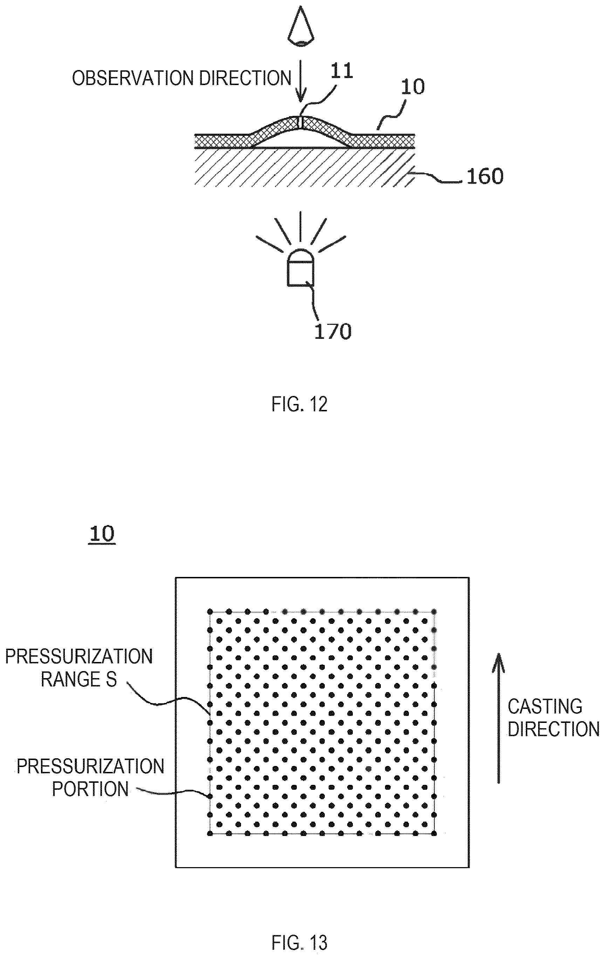

FIG. 12 is a view for explaining an example of a method for confirming an occurrence of a crack in the pressurization portion. The illustrated example uses a light source device in which a plate of transparent resin or inorganic glass is used as a stage 160, and a light source 170 such as a fluorescent lamp, a halogen light, or a light emitting diode is placed below the stage 160. The sample 10 is superposed on the stage 160 of the light source device so that the recessed side of the pressurization portion is on the light source 170 side, and light from the light source 170 is transmitted through a crack 11 formed in the pressurization portion of the sample 10. By placing the light source on the recessed side of the pressurization portion, the transmitted light of the pressurization portion can be clearly confirmed by visual observation from the protrusion side. Furthermore, by observing at a low magnification (typically about 10 to 50 times) using a microscope or a magnifying glass, a part of the crack 11 that shines like a streak with a width becomes clear. Defects such as scratches and holes originally included in the amorphous alloy ribbon can be distinguished from the difference in local light transmission (luminance), the occurrence location, and the difference in the form of crack due to the pressurization portion formation, and fine cracks can also be determined.

It is also preferable to observe the pressurization portion in a state of being magnified using a CCD camera or a CMOS camera and projected onto a monitor. The state of the pressurization portion may be evaluated by performing image analysis. It is found that the degree of crack (severity of damage) occurred in the pressurization portion of the sample 10 to be observed and the degree of embrittlement correlate with each other. It is also preferable to determine the presence or absence and degree of the crack based on the threshold value by binarizing a captured image, for example, by the arithmetic processing means, quantifying presence or absence of the streak-like pattern portion corresponding to the crack portion and its area. This makes it possible to easily perform the determination, and suppress the variation in determination due to individual differences.

The crack may be determined by discontinuity of waviness of the surface shape of the pressurization portion. The waviness of the surface of the pressurization portion of the sample 10 can be measured in a non-contact manner with a laser microscope or the like.

The composition of the amorphous alloy ribbon of the present disclosure is not particularly limited, but for example, there are an alloy ribbon having a composition of Fe-Si-B-based, known as METGLAS (registered trademark) 2605SA1 material or 2605HB1M material, and alloy ribbons having compositions such as Fe-Si-B-C-based and Fe-Si-B-C-Cr-based that contain other elements. The amorphous alloy ribbon may be an alloy ribbon that can be nanocrystallized by heat treatment. For example, there are alloy ribbons having a composition of Fe-Si-B-Cu-Nb-based, known as FINEMET (registered trademark), and alloy ribbons having other compositions such as Fe-Cu-Si-B-based, Fe-Cu-B-based, and Fe-Ni-Cu-Si-B-based. The thickness of these amorphous alloy ribbons is preferably 10 to 40 µm.

In the explanation of the pressurization test device, the sample 10 having been cut to a width of 70 mm and a length of 70 mm for evaluation is described. However, the sample is not limited to this size.

For example, the embrittlement of an amorphous alloy ribbon having a width of 142 mm can be evaluated by using, as the sample 10, an amorphous alloy ribbon having been cut to a length suitable for evaluation (e.g., about 1 m in length) with the width of 142 mm as is, and arranging the evaluation region of the amorphous alloy ribbon so as to be at the position shown in the sample 10 of the pressurization test device, while moving the amorphous alloy ribbon.

The amorphous lamination core for motor can be manufactured by evaluating the embrittlement with the amorphous alloy ribbon used for punching, performing the punching process using the amorphous alloy ribbon with the degree of embrittlement of equal to or less than 3.0%, and laminating the amorphous alloy pieces obtained in the punching process. Thus, it is possible to produce an amorphous lamination core for motor while suppressing a crack from occurring in the positioning hole during a plurality of punching processes and ensuring positioning accuracy. Thus, it is possible to obtain an amorphous lamination core for motor having good shape accuracy.

This amorphous alloy piece of the amorphous lamination core for motor of the present disclosure has a degree of embrittlement of equal to or less than 3.0%. Since the amorphous alloy piece after punching does not have an area for evaluation at the locations shown in FIGS. 4 to 7, the degree of embrittlement can be evaluated by selecting the evaluation location from, for example, the yoke portion 3 and the teeth portion 4, and conducting the pressurization test with the pressurization test device so that the number of pressurization portions becomes 100 or more. This degree of embrittlement is about the same as the degree of embrittlement of the amorphous alloy ribbon before punching.

### EXAMPLES

### (Example 1)

The embrittlement of Fe-Si-B-based amorphous alloy ribbon (2605HB1M manufactured by Hitachi Metals, Ltd.) was evaluated. Four amorphous alloy ribbons (samples 1 to 4) having different manufacturing lots and one amorphous alloy ribbon (sample 5) having a different manufacturing process were prepared. This amorphous alloy ribbon has a width of 142 mm and a thickness of 26 µm, and each has a weight of about 700 kg. Samples for evaluation were cut from these five amorphous alloy ribbons. The width remains 142 mm and the length was 1.03 m.

Using a 3-axis robot as the pressurization test device, a pressurization portion with 313 indentations in one evaluation region of the sample was formed.

As the 3-axis robot, a tabletop robot TT series manufactured by IAI Corporation was used. A push-pull gauge of Aikoh Engineering Co., Ltd. to which a pressurization member is attached is fastened and fixed to the slider of the Z-axis direction drive unit. The pressurization member includes a columnar body portion and a conical portion having an obtuse vertex angle at its end portion as shown in FIG. 8. The pressurization member used is made of beryllium copper, the body is ϕ1.4 mm, the conical portion is ϕ4 mm on the bottom surface, and the vertex angle θ is 120°.

As the base member 20, an aluminum plate with a thickness of 15 mm was fastened and fixed with bolts to the slider (stage) of the Y-axis direction drive unit of the 3-axis robot, and a commercially available magnet sheet with a thickness of 0.7 mm was stacked and fixed with double-sided tape as the magnetic adsorbent member 25. As the elastic member 30, a commercially available silicone rubber sheet was placed on the magnet sheet. A silicone rubber with a thickness of 0.8 mm and a Shore A hardness of 50 was used. A marking was formed on the silicon rubber sheet for positioning for arranging the test samples, and the test samples were placed with reference to the marking to form the pressurization portion.

A pressurization test was conducted on 15 evaluation regions by arranging the sample and moving the sample as necessary so that the evaluation region of the sample was positioned at the evaluation region 12a shown in FIG. 5.

FIG. 13 shows a plan view of one evaluation region of the sample. In FIG. 13, the sample 10 is described as the sample 10 having been cut to a width of 70 mm and a length of 70 mm. A plurality of portions indicated by black circles in the figure indicate portions where the pressurization portion is formed. The operation of the 3-axis robot was programmed in advance. The region about 53.5 mm × about 53.5 mm was designated to be a range S (region indicated by the thin line connecting the centers of the pressurization portions at the four corners in FIG. 13) to be pressurized. The pressurization portions were formed in a staggered manner at the tip end of the pressurization member so that the interval between adjacent pressurization portions (center interval between the pressurization portions) became 4.46 mm. The operations of the X-axis direction drive unit and the Y-axis direction drive unit were controlled so that 313 pressurization portions were formed per one evaluation region. The pressurization member was lowered to a preset position at 300 mm/s, and the Z-axis direction drive unit was controlled so as to rise from the lowered position to a predetermined position. The position in the Z-axis direction was set so that a pressurization portion with a crack and a pressurization portion without a crack were mixed using a sample for setting conditions obtained from the same as-cast ribbon as the test sample. The force measured with the force gauge at the pressurization portion without a crack was about 14 N.

The pressurization test was conducted on the five samples having been cut from the five amorphous alloy ribbons in the evaluation region shown in FIG. 5.

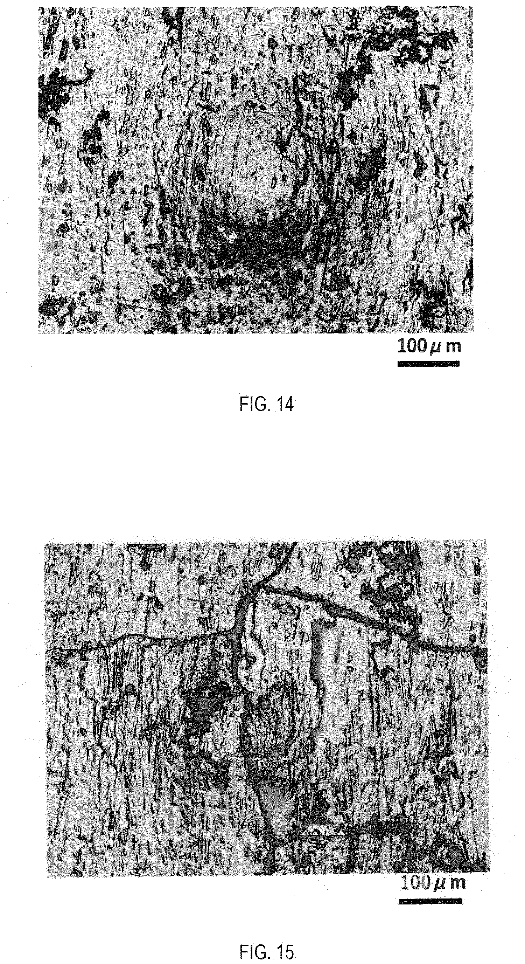

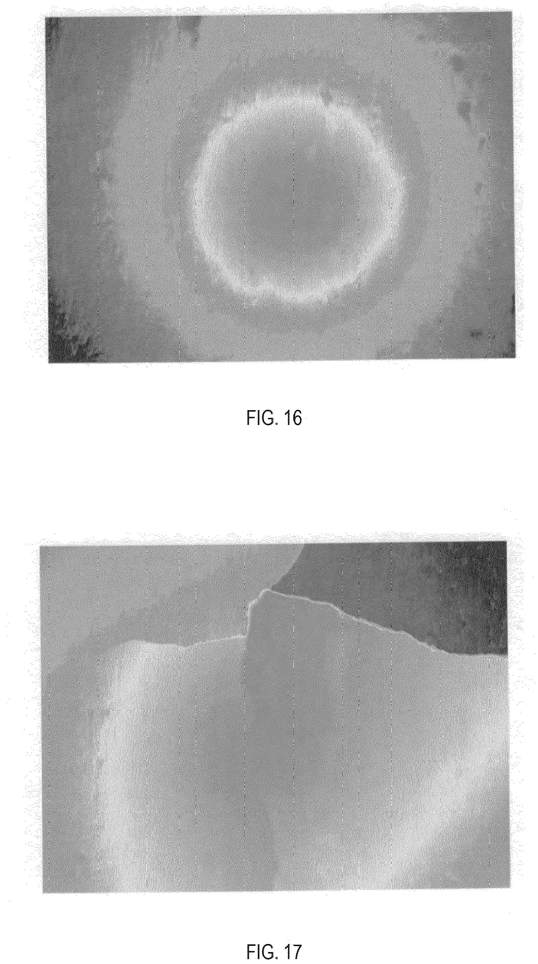

The pressurization portion of the sample was observed with a laser microscope (VK-X1000 manufactured by Keyence) at a magnification of 20 times for a region of 520 µm × 700 µm from the protrusion side to confirm the state of cracking. FIGS. 14 and 15 show enlarged photographs of the pressurization portion by a laser microscope. FIG. 14 is a photograph of the pressurization portion without a crack, and FIG. 15 is a photograph of the pressurization portion with a crack, each of which is shown as a typical form. In the same observation field of view as that in FIGS. 14 and 15, the surface waviness was image-processed and converted into a visually recognizable color tone for confirmation. FIGS. 16 and 17 are photographs in which the waviness of the surface is the difference in brightness. In the pressurization portion without a crack shown in FIG. 16, the waviness on the surface was observed in a halo shape as continuous brightness. On the other hand, in the pressurization portion with a crack as shown in FIG. 17, the cracks run in all directions from the central portion, and in the region defined by the cracks, the waviness of the surface was observed as different brightness.

Next, using the five amorphous alloy ribbons, the amorphous alloy piece shown in FIG. 2 was punched a plurality of times using the progressive mold shown in FIG. 3. In each amorphous alloy ribbon, presence or absence of a crack in the positioning hole after punching was confirmed.

Table 1 shows the evaluation results of the five samples. Table 1 shows the total number N0 of pressurization portions, the number N of pressurization portions with a crack, the degree of embrittlement, the total number of confirmed positioning holes, and the number of positioning holes where cracks have occurred.

As shown in Table 1, when the amorphous alloy ribbons of samples 1 to 4 having the degree of embrittlement of equal to or less than 3.0% are used, occurrence of cracks in the positioning holes can be suppressed.

**[Table 1]**

| SAMPLE | TOTAL NUMBER N0 OF PRESSURIZATION PORTIONS | NUMBER N OF PRESSURIZATION PORTIONS WITH CRACK | DEGREE OF EMBRITTLEMENT (%) | CRACK STATE IN POSITIONING HOLE | |
|---|---|---|---|---|---|
| | | | | TOTAL NUMBER OF CONFIRMATION | NUMBER OF CRACKS |
| 1 | 4695 | 59 | 1.26% | 64 | 0 |
| 2 | 4695 | 21 | 0.45% | 64 | 0 |
| 3 | 4695 | 64 | 1.36% | 64 | 0 |
| 4 | 4695 | 49 | 1.04% | 64 | 0 |
| 5 | 4695 | 170 | 3.62% | 64 | 10 |

According to the present disclosure, it is possible to manufacture an amorphous lamination core for motor using an amorphous alloy ribbon having a good degree of embrittlement, and it is possible to suppress a crack from occurring in a positioning hole when a plurality of punching processes are performed. Thus, it is possible to obtain an amorphous lamination core for motor having good shape accuracy.

## Claims

1. An amorphous lamination core (1) for motor, wherein
the amorphous lamination core for motor is configured by laminating amorphous alloy pieces (2) formed by punching an amorphous alloy ribbon,
a pressurization member (125) is pressed from one side to a plurality of positions of the amorphous alloy piece, a total number of pressurization portions to which the pressurization member is pressed is N0, a number of pressurization portions with a crack is N; N0 is equal to or more than 100, and a degree of embrittlement is N/N0 × 100(%),
the pressurization member is made of beryllium copper, and has a body portion of ϕ1.4 mm and·a conical portion (127), the conical portion has a bottom surface of ϕ4 mm and a vertex angle θ of 120°, and when the degree of embrittlement is evaluated with the conical portion being pressed against the amorphous alloy piece and pressurization force of the pressurization member being set to 14 N,
a degree of embrittlement of the amorphous alloy piece is equal to or less than 3.0%.

2. The amorphous lamination core for motor according to claim 1, wherein an interval of the pressurization portion is 4 to 6 mm.

3. An amorphous alloy ribbon for motor, wherein
the amorphous alloy ribbon for motor is used for an amorphous lamination core (1) for motor produced by punching and laminating amorphous alloy ribbons,
the amorphous alloy ribbon for motor has a long shape having a width of equal to or greater than 100 mm,
a total of 10 evaluation regions of five locations from each of both end portions of the amorphous alloy ribbon for motor in a width direction or a total of 15 evaluation regions of five locations from each of both end portions and center portion in a width direction are set, one evaluation region is a region of about 53.5 mm × about 53.5 mm, a pressurization member (125) is pressed against 313 points in the one region, a total number of pressurization portions to which a pressurization member is pressed is N0, a number of pressurization portions with a crack is N, and a degree of embrittlement is N/N0 × 100(%),
the pressurization member is made of beryllium copper, and has a body portion of ϕ1.4 mm and a conical portion (127), the conical portion has a bottom surface of ϕ4 mm and a vertex angle θ of 120°, and when the degree of embrittlement is evaluated with the conical portion being pressed against the amorphous alloy ribbon for motor and pressurization force of the pressurization member being set to 14 N, and
the degree of embrittlement is equal to or less than 3.0%.

4. The amorphous alloy ribbon for motor according to claim 3, wherein an interval of the pressurization portion is 4 to 6 mm.

5. A method for manufacturing an amorphous lamination core (1) for motor, the method for manufacturing in which an amorphous alloy piece (2) is produced by punching an amorphous alloy ribbon, and an amorphous lamination core for motor is produced by laminating the amorphous alloy piece,
preparing an amorphous alloy ribbon for motor that is long and has a width of equal to or greater than 100 mm is included,
a total of 10 evaluation regions of five locations from each of both end portions of the amorphous alloy ribbon in a width direction or a total of 15 evaluation regions of five locations from each of both end portions and center portion in a width direction are set, one evaluation region is a region of about 53.5 mm × about 53.5 mm, a pressurization member (125) is pressed against 313 points in the one region, a total number of pressurization portions to which a pressurization member is pressed is N0, a number of pressurization portions with a crack is N, and a degree of embrittlement is N/N0 × 100(%),
the pressurization member is made of beryllium copper, and has a body portion of ϕ1.4 mm and a conical portion (127), the conical portion has a bottom surface of ϕ4 mm and a vertex angle θ of 120°, and when the degree of embrittlement is evaluated with the conical portion being pressed against the amorphous alloy ribbon and pressurization force of the pressurization member being set to 14 N, and
the degree of embrittlement is equal to or less than 3.0%.

6. The method for manufacturing according to claim 5, wherein an interval of the pressurization portion is 4 to 6 mm.

7. The method for manufacturing according to claim 5 or 6, wherein the amorphous alloy piece is produced by punching the amorphous alloy ribbon a plurality of times.

8. The method for manufacturing according to any one of claims 5 to 7, wherein an amorphous alloy piece of a lamination body is produced by laminating and then punching the amorphous alloy ribbon.

9. The method for manufacturing according to any one of claims 5 to 8, wherein an evaluation sample is cut out from an as-cast ribbon wrapped with a long amorphous alloy ribbon, the degree of embrittlement of the evaluation sample is evaluated, and an amorphous alloy ribbon of an as-cast ribbon with the degree of embrittlement of equal to or less than 3.0% is used.
